(19) **Europäisches Patentamt / European Patent Office / Office européen des brevets**

(11) **EP 2 608 682 B1**

(12) **EUROPEAN PATENT SPECIFICATION**

(45) Date of publication and mention
of the grant of the patent:
**13.12.2017   Bulletin 2017/50**

(51) Int Cl.:
*A23J 3/14* (2006.01)        *A23J 1/12* (2006.01)
*A23J 3/34* (2006.01)        *A23L 33/185* (2016.01)
*A23K 10/14* (2016.01)       *A23K 20/147* (2016.01)
*A23G 3/54* (2006.01)        *A23G 1/54* (2006.01)

(21) Application number: **11751747.4**

(22) Date of filing: **19.08.2011**

(86) International application number:
**PCT/US2011/048448**

(87) International publication number:
**WO 2012/027226 (01.03.2012 Gazette 2012/09)**

(54) **METHOD OF MAKING A SNACK BAR COMPRISING A LOW TEMPERATURE RICE PROTEIN CONCENTRATE**

VERFAHREN ZUR HERSTELLUNG EINES SNACKRIEGELS MIT EINEM NIEDRIGTEMPERATUR-REISPROTEINKONZENTRAT

PROCÉDÉ DE PRÉPARATION D'UNE BARRE SNACK COMPORTANT UN CONCENTRÉ DE PROTÉINE DE RIZ À BASSE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **24.08.2010   US 376579 P**

(43) Date of publication of application:
**03.07.2013   Bulletin 2013/27**

(73) Proprietor: **Danisco US Inc.**
**Palo Alto, CA 94304 (US)**

(72) Inventors:
• **DUAN, Gang**
  **Palo Alto, California 94304 (US)**
• **JACOBSEN, Kathleen Burns**
  **Olathe**
  **Kansas 66062 (US)**
• **SHETTY, Jayarama K.**
  **Palo Alto, California 94304 (US)**
• **YING, Qian**
  **Palo Alto, California 94304 (US)**

• **WILSON, Troy**
  **Palo Alto, California 94304 (US)**

(74) Representative: **Kiddle, Simon John et al**
**Mewburn Ellis LLP**
**City Tower**
**40 Basinghall Street**
**London EC2V 5DE (GB)**

(56) References cited:
WO-A1-03/082026        WO-A1-2006/058609
WO-A1-2006/066389      WO-A1-2006/130713
WO-A2-2005/082155      WO-A2-2006/119217
US-A1- 2003 185 941    US-A1- 2006 035 010
US-A1- 2008 020 098

Remarks:
The file contains technical information submitted after the application was filed and not included in this specification

EP 2 608 682 B1

**Description**

## FIELD OF THE DISCLOSURE

The disclosure relates to a food article comprising a rice protein concentrate and a process of making the food article.

## BACKGROUND

Rice is one of the largest food ingredients and represents a staple food for more than half the world's population. For example, rice is used as a starch source in specialty food formulations and as a carbon source in processes of making monosodium glutamate, alcohol, and beer. In addition, rice is used as a component of milk (*see* U.S. Patent No. 4,744,992) and baby food formulas. Rice is composed of 75-80% starch, 8-9% proteins, 9-12% water, and 2.4-5% other components. The high molecular weight storage protein glutelin accounts for 80-90% of rice proteins. Albumin, globulins, and prolamins account for 10-20% of the remaining protein.

The protein component of rice has several particularly desirable characteristics. For example, rice protein is hypoallergenic and rich in essential amino acids compared to other plant proteins. Rice proteins, for example, contain the highest level of methionine (>4.0 %) among all food proteins. However, research on the functional properties and physiological effects of rice proteins in food and beverage formulations has been limited. Rice proteins have been reported to have beneficial physiological effects, including cholesterol-lowering effects, although the mechanism by which rice proteins exert these effects is not fully elucidated. *See e.g.,* Yang et al. (2007) Biosci. Biotechnol. Biochem. 71: 694-703. In this respect, rice proteins share similar properties with soy proteins and high molecular weight fractions obtained from soy protein hydrolysates. *See, e.g.,* Carroll et al. (1991) J. Am. Dietetic Assoc. 91: 820-827; Anderson et al. (1995) New Engl. J. Med. 333: 276-282.

Production processes for producing rice starch hydrolysates and/or high protein rice flour typically comprise cooking a slurry of rice flour with a thermostable alpha amylase at a temperature greater than 75°C. High alkaline extraction (>pH 10.0) can be used to separate the insoluble proteins. *See* Shaw et al. (1992) Biosci. Biotechnol. Biochem. 56: 1071-1073; U.S. Patent No. 4,990,344. The use of a high temperature process (HT-Process), however, denatures rice proteins. *See* Ju et al. (2001) J. Food Science 66: 229-232. Further, efforts to incorporate rice protein concentrates made by a HT-Process into food articles have been frustrated by the hygroscopic properties of the rice protein concentrate. The HT-Process concentrate adsorbs high amounts of water, resulting in a crumbly texture in food comprising rice concentrates. Making a workable dough can require the addition of large amounts of water, which reduces shelf-life. US2006/0035010 describes a confectionery bar comprising a proteinaceous material and a carbohydrate material in a relative weight ratio higher than 1.

WO 2005/082155 A2 discloses a process for producing a high-purity rice protein concentrate using a low temperature process (LT-Process). In the LT-Process, a rice substrate is contacted with two starch-processing enzymes, where at least one of the enzymes is a granular starch hydrolyzing enzyme (GSHE). Granular rice starch is hydrolyzed below the denaturing temperature and at or near the isoelectric pH of the rice proteins. The LT-Process advantageously produces a rice protein concentrate having a higher percentage soluble protein than the conventional HT-Process, as shown in WO 2005/082155.

## SUMMARY

The disclosure provides a rice protein concentrate prepared by a LT-Process. The rice concentrate has advantageous properties compared to a rice concentrate prepared by a HT-Process. For example, the LT-Process produces a rice protein concentrate having improved texture and cohesiveness. These advantageous properties permit an improved process of preparing a food article containing the rice protein concentrate. For example, the rice protein concentrate may be added to the food product in the form of a wet dough that contains less than about 45% of water, compared with a wet dough made from a similar amount of soy protein. This property advantageously provides the food products with an improved shelf life and more palatable texture. Further, the rice protein concentrate produced by the LT-Process has beneficial physiological effects: it reduces cholesterol, enhances lactic acid dehydrogenase (LDH) activity, and lowers blood urea nitrogen (BUN). Food articles, e.g., snack bars, containing the rice protein concentrate thus can be used as dietary supplements.

Described herein is a food product comprising a rice protein concentrate produced by a low temperature process is provided. The low temperature process comprises:

(a) hydrolyzing a substantial portion of the starch in a rice substrate with (i) an enzyme having granular starch hydrolyzing (GSH) activity and (ii) a second starch hydrolyzing enzyme at a temperature at or below 72°C and at a pH of 3.0 to 6.5 for a period of time sufficient to obtain a solubilized starch fraction and a residue fraction containing insoluble rice protein; and

(b) separating the solubilized starch fraction from the residue fraction to obtain the rice protein concentrate.

The food product contains the rice protein concentrate in the form of wet dough.

The present invention relates to a method of making a snack bar comprising a rice protein concentrate, wherein the rice protein concentrate is in the form of a wet dough, the method comprising:

(a) hydrolyzing a substantial portion of the starch in a rice substrate with (i) an enzyme having granular starch hydrolyzing (GSH) activity and (ii) a second starch hydrolyzing enzyme wherein incubation of said rice substrate with enzymes (i) and (ii) is carried out at a temperature at or below 72°C and at a pH of 3.0 to 6.5 for a period of time sufficient to obtain a solubilized starch fraction and a residue fraction containing insoluble rice protein;

(b) separating the solubilized starch fraction from the residue fraction to obtain the rice protein concentrate.

(c) dispersing the rice protein concentrate in water or another suitable solvent to form a wet dough;
wherein the rice protein concentrate is in the form of a wet dough suitable for slabbing and/or extruding and

(d) making a snack bar or nutrition bar comprising said wet dough.

In one embodiment, the enzyme having GSH activity is a glucoamylase, which may be derived from a strain of *Humicola, Rhizopus,* or *Aspergillus.* The GSHE alternatively may be an alpha amylase. The second starch hydrolyzing enzyme also may be a GSHE, e.g., an alpha-amylase derived from a bacterial source. The second starch hydrolyzing enzyme, however, also may be an enzyme that is not a GSHE, such as a beta amylase or pullulanse. In some embodiments, the GSHE is obtained from the heterologous expression in a *Trichoderma* strain or an *Aspergillus* strain.

In the method above, the rice substrate may be slurried, with a dry solid content of between 10 to 55%. The temperature of the process above may be between 70°C and 55°C in some embodiments. The method may further comprise enzymatically hydrolyzing the rice protein concentrate obtained in subpart (b) with an enzyme having GSH activity and a starch hydrolyzing enzyme at a pH of 3.0 to 6.5 and at a temperature range of 70°C to 55°C to obtain a fraction including solubilized starch and insoluble rice protein; and (d) separating the fractions to obtain a high-purity rice protein concentrate. The method above may further comprise purifying and/or drying the rice protein concentrate. The protein content of the rice protein concentrate may be at least 20%, and the protein content of the high-purity rice protein concentrate may be at least 60%.

## BRIEF DESCRIPTION OF THE DRAWING

The accompanying drawing is incorporated in and constitutes a part of the specification, and illustrates various embodiments.

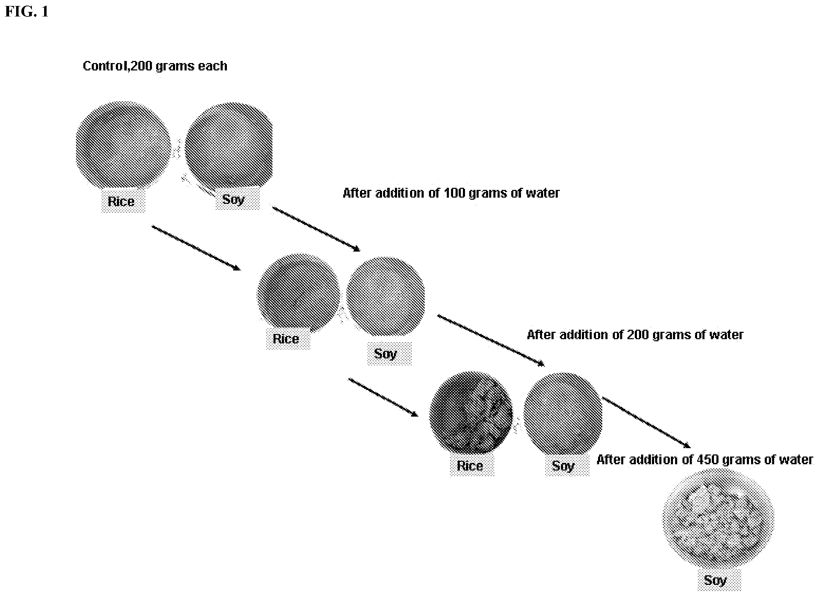

FIG.1 compares the hydration of rice and soy protein concentrates to make wet doughs.

## DETAILED DESCRIPTION

Rice protein concentrates prepared at low temperature exhibit improved functionality and beneficial physiological benefits, including lowered cholesterol, increased lactic acid dehydrogenase activity, and lowered blood urea nitrogen. Use of the rice protein concentrate improved processing steps in the formulation of a food article containing the concentrate. The food product advantageously shows an extending shelf life and improved palatable texture.

**1. Definitions and Abbreviations**

Unless otherwise defined, all technical and scientific terms used herein have the same meaning as commonly understood by one of ordinary skill in the art. In accordance with this detailed description, the following abbreviations and definitions apply.

**1.1. Definitions**

The term "rice" refers to a plant that is classified as *Oryza saliva.* The term "rice substrate" includes all forms or parts of rice (polished or unpolished), such as whole grains, broken grains, rice grits, and rice flour.

The term "starch" refers to complex plant polysaccharide carbohydrates with the formula $(C_6H_{10}O_5)_n$, where n can be any number. The term "granular starch" refers to uncooked (raw) starch, which has not been subject to gelatinization. The term "gelatinization" refers to solubilization of a starch molecule to form a viscous suspension.

The term "rice protein concentrate" refers to a rice protein fraction having a rice protein concentrate greater than about 10% (w/w). "About," when modifying a parameter, refers to the degree of experimental error typically associated with measuring the parameter. The term "high-purity rice protein concentrate" refers to a protein fraction having a rice protein content of at least about 60%. Rice protein contents encompassed by this term specifically include at least 63%, 65%, 66%, 67%, 68%, 69%, 70%, 72%, 75%, or 80% or greater, for example. The term "protein" and "polypeptide" are used interchangeably.

The term "denaturation temperature" refers to the temperature at which a protein loses its secondary and tertiary structure. The term "isoelectric point" refers to the pH of a solution at which a protein or mixture of proteins carries a net zero charge.

The term "dextrose equivalent" (DE) is a measure of total reducing sugars, calculated as D-glucose on a dry weight basis. Unhydrolyzed granular starch has a DE of essentially zero, and D-glucose has a DE of 100.

The term "total sugar content" refers to the total sugar content present in a starch composition. The term "dry solids content" (ds) refers to the total solids of a slurry (in %) on a dry weight basis. The term "slurry" refers to an aqueous mixture including insolubles. "Brix" refers to a well known hydrometer scale for measuring the sugar content of a solution at a given temperature. The Brix scale measures the number of grams of sucrose present per 100 grams of aqueous sugar solution (the total solubilized solid content). Brix measurements are frequently made by a hydrometer or refractometer.

The term "hydrolysis of starch" refers to the cleavage of glucosidic bonds with the addition of water molecules. The phrase "substantial portion of starch" means at least 80% of the starch.

The term "degree of polymerization" (DP) refers to the number (n) of anhydroglucopyranose units in a given saccharine. For example, monosaccharides, such as glucose and fructose, are DP1. Disaccharides, such as maltose and sucrose, are examples of DP2. "DP3+" denotes polymers with a degree of polymerization of greater than 3.

The terms "granular starch hydrolyzing enzyme" and "an enzyme having granular starch hydrolyzing (GSH) activity" (collectively, GSHE) are used herein to refer to a glucoamylase or an alpha amylase, which have the ability to hydrolyze starch in granular form. The more general term "starch hydrolyzing enzyme" refers to a GSHE or another enzyme that hydrolyzes starch. Starch hydrolyzing enzymes that are not glucoamylases or alpha amylases include, but are not limited to, a pullulanase, beta amylase, cellulase, pectinase, and beta glucanase.

The terms "recombinant GSHE," "recombinantly expressed GSHE," and "recombinantly produced GSHE" refer to a mature GSHE protein sequence that is produced in a host cell from a heterologous polynucleotide. The symbol "r" may be used to denote a recombinant protein. For example, a *Humicola grisea* var. *thermoidea* GSHE expressed in a strain of *Trichoderma reesei* is denoted by "rH-GSHE." The terms "native GSHE" and "nGSHE" mean a GSHE, which was derived from a host organism, wherein the polynucleotide encoding the GSHE is endogenous to the host organism.

The term "amylase" refers to an enzyme that catalyzes the hydrolysis of starches. The term "alpha-amylase (EC 3.2.1.1)" refers to enzymes that catalyze the hydrolysis of alpha-1,4-glucosidic linkages. These enzymes have also been described as those effecting the exo- or endohydrolysis of 1,4-D-glucosidic linkages in polysaccharides containing 1,4-D-glucose units. Another term used to describe these enzymes is glycogenase. Exemplary enzymes include alpha-1,4-glucan 4-glucanohydrase glucanohydrolase.

The term "glucoamylase" refers to the amyloglucosidase class of enzymes (EC.3.2.1.3, glucoamylase, alpha-1, 4-D-glucan glucohydrolase). These are exo-acting enzymes, which release glucosyl residues from the non-reducing ends of amylose and amylopectin molecules. The enzymes also hydrolyze alpha-1,6 and alpha-1,3 linkages, although at much slower rates than alpha-1,4 linkages.

The term "glycosylation" refers to the post-transcriptional modification of a protein by the addition of carbohydrate moieties, wherein the carbohydrate is either N-linked or O-linked resulting in a glucoprotein. An N-linked carbohydrate moiety of a glycoprotein is attached by a glycosidic bond to the p-amide nitrogen of an asparagine residue. An O-linked carbohydrate is attached by a glycosidic bond to a protein through the hydroxy group of a serine or a threonine residue.

A "signal sequence" means a sequence of amino acids bound to the N-terminal portion of a protein, which facilitates the secretion of the mature form of the protein outside the cell. The mature form of an extracellular protein lacks the signal sequence, which is cleaved during the secretion process.

A "gene" refers to a DNA segment that is involved in producing a polypeptide and includes regions preceding and following the coding regions as well as intervening sequences (introns) between individual coding segments (exons).

The term "nucleic acid" means either DNA, RNA, single stranded or double stranded and chemical modifications thereof. The terms "nucleic acid" and "polynucleotide" may be used interchangeably herein. Because the genetic code is degenerate, more than one codon may be used to encode a particular amino acid, and the present invention encompasses polynucleotides, which encode a particular amino acid sequence.

A "vector" refers to a polynucleotide sequence designed to introduce nucleic acids into one or more cell types. Vectors include cloning vectors, expression vectors, shuttle vectors, plasmids, phage particles, cassettes, and the like. An "expression vector" means a DNA construct comprising a DNA sequence that is operably linked to a suitable control sequence capable of effecting expression of the DNA in a suitable host. Such control sequences may include a transcription promoter, an optional operator sequence to control transcription, a sequence encoding suitable ribosome binding sites on the mRNA, enhancers, and sequences that control termination of transcription and translation. The term "operably linked" refers to juxtaposition wherein the elements are in an arrangement allowing them to be functionally related. For example, a promoter can be operably linked to a coding sequence if it controls the transcription of the sequence.

The term "selectable marker" refers to a gene capable of expression in a host that allows for ease of selection of those hosts containing an introduced nucleic acid or vector. Examples of selectable markers, include but are not limited, to antimicrobials (e.g., hygromycin, bleomycin, or chloramphenicol) or genes that confer a metabolic advantage, such as a nutritional advantage on the host cell.

The term "derived" encompasses the terms originated from, obtained or obtainable from, and isolated from.

"Host strain" or "host cell" means a suitable host for an expression vector or DNA construct comprising a polynucleotide encoding a GSHE according to the invention. For example, "host cell" may means both cells and protoplasts created from the cells of a filamentous fungal strain, such as Trichoderma sp. The term "filamentous fungi" refers to all filamentous forms of the subdivision Eumycotina, including, but not limited to, *T. reesei* (previously classified as *T. longibrachiatum* and currently also known as *Hypocrea jecorina*), *T. viride, T. koningli, T. harzianum*; *Penicillium* sp.; *Humicola* sp., including *Humicola insolens* and *Humicola grisea*; *Chrysosporium* sp., including *C. lucknowense*; *Gliocladium* sp.; *Aspergillus* sp., including *A. oryzee, A. nidulans, A. niger,* and *A. awamori*; *Fusarium* sp., *Neurospora* sp., *Hypocrea* sp., and *Emericella* sp.

The term "contacting" refers to the placing of the respective enzymes in sufficiently close proximity to a respective rice substrate. Those skilled in the art will recognize that mixing solutions of the enzymes with the respective rice substrate can effect contacting. The term "incubating" refers to mixing a rice substrate with hydrolyzing enzymes under given conditions for a defined period of time.

The term "enzymatic conversion" refers to the modification of a rice substrate to yield soluble hydrolyzed granular rice starch and preferably to yield glucose. The term "slurry" refers to an aqueous mixture containing insoluble granular starch. Sometimes the terms "slurry" and "suspension" are used interchangeably.

The term "culturing," refers to growing a population of microbial cells under suitable conditions in a liquid or solid medium. In one embodiment, culturing refers to fermentative bioconversion of a granular starch substrate to glucose syrup or other desired end-products, typically in a vessel or reactor.

The terms "recovered," "isolated," and "separated" refer to a protein, cell, nucleic acid, or amino acid that is removed from at least one component with which it is naturally associated. The terms also refer to separating a mixture comprising soluble starch hydrolysate from a residue comprising substantially insoluble rice protein.

The terms "transformed," "stably transformed," or "transgenic" with reference to a cell means the cell has a non-native (i.e., heterologous) nucleic acid sequence integrated into its genome or as an episomal plasmid that is maintained through multiple generations. The term "expression" refers to the process by which a polypeptide is produced based on the nucleic acid sequence of a gene. The process includes both transcription and translation. The term "introduced" in the context of inserting a nucleic acid sequence into a cell, means "transfection," "transformation," or "transduction." The term includes the incorporation of a nucleic acid sequence into a eukaryotic or prokaryotic cell, where the nucleic acid sequence may be incorporated into the genome of the cell (for example, chromosome, plasmid, plastic, or mitochondrial DNA), converted into an autonomous replicon, or transiently expressed (for example, transfected mRNA).

The term "specific activity" means an enzyme unit defined as the number of moles of substrate converted to product by an enzyme preparation per unit time under specific conditions. Specific activity can be expressed as units/mg of protein, unless otherwise specified. As used herein "enzyme activity" refers to the action of an enzyme on its substrate. The term "granular starch hydrolyzing enzyme unit" is defined as being the amount of enzyme required to produce 1 mg of glucose per minute from a granular starch substrate under assay conditions of, for example, 50°C at pH 4.5 or 25°C at pH 5.0.

The term "food supplement" refers to a food that supplies nutrients missing or not consumed in sufficient quantity in a person's diet. The term "functional food" refers to a food comprising an additive that provides extra nutritional value. The term "animal feed" refers to food specifically designed for consumption by non-human animals. The term "food additive" refers to a component added to a food that improves its shelf-life.

"A", "an," and "the" include plural references unless the context clearly dictates otherwise. As used herein the term "comprising" and its cognates are used in their inclusive sense; that is, equivalent to the term "including" and its corresponding cognates.

## 1.2. Abbreviations

The following abbreviations apply unless indicated otherwise:

AAU        alpha-amylase unit;
ATCC®      American Type Culture Collection;
BUN        blood urea nitrogen;
DE         dextrose equivalent;
DNS        3,5 dinitrosalicylic acid;
DP         degree of polymerization;
ds         dry solids content;
EC         Enzyme Commission;
EDCC       experimental diet containing cholesterol;
GLDH       glutamic dehydrogenase;
GSH        granular starch hydrolyzing;
GSHE       granular starch hydrolyzing enzyme;
GU         Glucoamylase Unit;
HDL-C      high-density lipoprotein cholesterol;
HFCS       high-fructose corn syrup;
H-GA       *Humicola*-Glucoamylase;
HT-Process high temperature process;
LDH        lactic acid dehydrogenase;
LB         Luria Bertani broth;
LT-Process low temperature process;
MOPS       morpholinepropanesulfonic acid;
NADH       nicotine adenine dinucleotide, reduced;
NCBI       National Center for Biotechnology Information;
NRRL       Northern Regional Research Laboratory Agricultural Research Service Culture Collection;
PEG        polyethylene glycol;
$PNP-G_7$  p-nitrophenyl maltoheptoside;
RT-PCR     reverse transcriptase polymerase chain reaction;
SD         Sabouraud Dextrose broth;
TC         total cholesterol;
TG         triglyceride;
YM         Yeast Malt Extract broth; and
wt         weight.

## 2. Low Temperature Process (LT-Process) for Producing a Rice Protein Concentrate

A rice protein concentrate can be produced using the LT-Process described in WO 2005/082155 A2. The method comprises enzymatically hydrolyzing a rice substrate below the temperature at which rice proteins denature and at or near the isoelectric pH of the protein in the rice substrate. Two fractions are obtained: (1) a solubilized starch fraction of starch hydrolysate and (2) a residue fraction containing insoluble rice protein. The solubilized starch fraction can be separated from the residue fraction, and the rice protein concentrate can be obtained from the residue fraction. In one embodiment, the rice protein concentrate is obtained without further manipulation of the residue fraction. In another embodiment, the residue fraction may be processed further to increase the weight percent of rice proteins in the fraction. In some embodiments, the rice protein concentrate is a high-purity rice protein concentrate.

### 2.1. Rice Substrates

A rice substrate to be employed in the process of the invention may be obtained from any known source. For example, the rice substrate may be a rice flour or a polished rice substrate. The rice substrate may contain, for example, a gross protein content of about 6-10% ($N \times 5.95$; $N$ stands for the percent of total nitrogen as determined by the Kjeldahl method, while 5.95 is the conversion factor for rice); about 70-82% carbohydrate; about 9-12% moisture; about 0.4-1.5% crude fat; about 0.6 to 0.8% ash and about 0.2 to 0.6% fiber.

Rice proteins found in the grain have limited solubility in water. These proteins are predominantly insoluble (alkali-soluble) glutelins (about 80-90%); salt-soluble globulins (7-15%); water-soluble albumins (9-10%); and alcohol-soluble prolamins (about 2-5%). *See* Houston et al. (1970) Cereal Chem. 47: 5; Perdon et al. (1978) Phytochem. 17:

351; Landers et al. (1994) Cereal Chem. 71: 409-11.

In some embodiments, the rice substrate can be milled to a desired particle size prior to dispersion in water or wet ground during processing. Water may be added to form a slurry prior to processing. The rice substrate in the slurry may comprise about 10 to about 55% ds, about 20 to about 50% ds, about 25 to about 45% ds, about 20 to about 40% ds, about 20 to about 35% ds, or about 30 to 35% ds.

### 2.2. Granular Starch Hydrolyzing Enzymes (GSHE)

At least one of the starch hydrolyzing enzymes used in the disclosed methods is a granular starch hydrolyzing enzyme (GSHE). A GSHE has glucoamylase activity or alpha amylase activity. *See* Tosi et al., (1993) Can. J. Microbiol. 39: 846-55; Kanlayakrit et al. (1987) J. Ferment. Technol. 65: 379-85. GSHE may be naturally occurring or may be produced recombinantly. Recombinantly produced GSHE may be genetically modified. Naturally occurring GSHEs have been recovered from fungal cells such as Humicola sp., Aspergillus sp., Mucor sp., and Rhizopus sp. For example, a GSHE from *Rhizopus oryzae* has been described in Ashikari et al. (1986) Agric. Biol. Chem. 50: 957-64 and U.S. Patent No. 4,863,864. A *Humicola grisea* GSHE has been described in Allison et al. (1992) Curr. Genet. 21:225-29 and EP 171 218. An *Aspergillus awamori* var. *kawachi* GSHE has been described in Hayashida et al. (1989) Agric. Biol. Chem. 53: 923-29. An *Aspergillus shirousami* GSHE has been described in Shibuya et al. (1990) Agric. Biol. Chem. 54: 1905-14.

GSHE also may be recovered from fungi, including ATCC 16453, Northern Regional Research Laboratory (NRRL) 15219, NRRL 15220, NRRL 15221, NRRL 15222, NRRL 15223, NRRL 15224 and NRRL 15225 as well as genetically altered strains thereof. *See* EP 171 218. In one embodiment, a GSHE may be derived from a strain *of Humicola grisea,* particularly a strain of *Humicola grisea* var. *thermoidea* (H-GSHE). *See* U.S. Patent No. 4,618,579. In another embodiment, a GSHE may be derived from a strain of *Aspergillus awamori,* particularly a strain of A. *awamori* var. *kawachi* (A-GSHE). *See* Hayashida et al. (1989) Agric. Biol. Chem. 53: 923-29. In a further embodiment, a GSHE enzyme may be derived from Rhizopus, such as the Koji strain *of R. niveus* (sold under the trade name "CU CONC") or the enzyme from Rhizopus sold under the trade name GLUCZYME.

### 2.2.1. Alpha Amylases

An alpha amylase is used in some of the embodiments. An alpha amylase is an enzyme having an Enzyme Commission (EC) number EC 3.2.1.1. In some embodiments, the alpha amylase is a thermostable bacterial alpha amylase. Suitable alpha amylases include naturally occurring amylases, as well as recombinantly produced and mutant alpha amylases. The alpha amylase may be derived from a *Bacillus* species, such as *B. subtilis, B. stearothermophilus, B. lentus, B. licheniformis, B. coagulans,* and *B. amyloliquefaciens* (*see, e.g.,* U.S. Patents No. 5,763,385; 5,824,532; 5,958,739; 6,008,026, and 6,361,809). *Bacillus* strains producing useful amylases include the strains having American Type Culture Collection Accession Nos. (ATCC®) 39709; ATCC 11945; ATCC 6598; ATCC 6634; ATCC 8480; ATCC 9945A. Useful commercially available alpha amylases include SPEZYME™ AA; SPEZYME™ FRED; GZYME™ G997 (Genencor, a Danisco A/S division), TERMAMYL™ 120-L, TERMAMYL™ LC, TERMAMYL™ SC, and SUPRA (Novozymes).

### 2.2.2. Alpha Amylase Activity

An alpha-amylase unit (AAU) refers to alpha-amylase activity measured according to the method disclosed in U.S. Patent No. 5,958,739. One unit of AAU refers to the amount of enzyme required to hydrolyze 10 mg of starch per minute under specified conditions. The assay for alpha-amylase activity uses p-nitrophenyl maltoheptoside (PNP-$G_7$) as the substrate with the non-reducing terminal sugar chemically blocked. PNP-$G_7$ can be cleaved by an endo-amylase, for example alpha-amylase. Following the cleavage, an alpha-glucosidase and a glucoamylase digest the substrate to liberate free PNP molecules, which display a yellow color and can be measured by visible spectrophotometry at 410 nm. The rate of PNP release is proportional to alpha-amylase activity. The AAU of a given sample is calculated against a standard control.

### 2.2.3. Glucoamylases

Glucoamylases (EC 3.2.1.3) remove successive glucose units from the non-reducing ends of starch. The enzyme can hydrolyze both linear and branched glucosidic linkages of starch, amylose and amylopectin. Glucoamylase may be derived from bacteria, plants, and fungi.

Glucoamylases secreted from fungi of the genera *Aspergillus, Rhizopus, Humicola* and *Mucor* have been derived from fungal strains, including *Aspergillus niger, Aspergillus awamori, Rhizopus niveus, Rhizopus oryzae, Mucor miehe, Humicola grisea, Aspergillus shirousami* and *Humicola (Thermomyces) laniginosa* (*See, e.g.,* Boel et al. (1984) EMBO J. 3:1097-1102; WO 92/00381; WO 00/04136; Chen et al. (1996) Prot. Eng. 9:499-505; Taylor et al. (1978) Carbohydrate Res. 61:301-08; and Jensen et al. (1988) Can. J. Microbiol. 34:218-23). Enzymes having glucoamylase activity used commercially are produced for examples, from *Aspergillus niger* (OPTIDEX L™-400 and G ZYME™ G990 4X from Genencor, a Danisco A/S division) or *Rhizopus* species (CU.CONC™, Shin Nihon Chemicals, Japan; GLUCZYME™, Amano Pharmaceuticals, Japan).

Glucoamylase may be expressed in a heterologous host cell, such as a *Trichoderma* host. For example, *Humicola*-Glucoamylase (H-GA), e.g., from *Humicola grisea* var. *thermoidea,* may be recombinantly expressed from a *Trichoderma* host, as described in U.S. Patent No. 7,303,899. After a typical fermentation, the fermentation broth may be centrifuged to separate the biomass. The clear culture filtrate containing the expressed glucoamylase may be concentrated using ultrafiltration prior to use in the application studies.

### 2.2.4. Glucoamylase Activity

Glucoamylase activity is determined, for example, by measuring the reducing sugar released from a solution of 2% (w/v) soluble starch substrate during an incubation at pH 4.6, 40°C. One Glucoamylase Unit (GU) is defined as the amount of enzyme required to release one milligram of reducing sugar in the form of glucose from a soluble starch per hour under specified conditions.

### 2.3. Recombinantly produced GSHE

The GSHE may be a recombinantly expressed GSHE (rGSHE). rGSHE include naturally occurring proteins that are obtained from one species and expressed in another, heterologous species. In some embodiments, the sequence of the naturally occurring protein can be modified through genetic engineering. The altered protein sequence may have advantageous properties, e.g., increased specific activity or thermostability, compared to the naturally occurring sequence. The extent to which a rGSHE sequence is modified may vary. For example, a rGSHE may have at least 50%, 55%, 60%, 65%, 70%, 75%, 80%, 85%, 90%, 93%, 95%, 97%, 98%, or 99% sequence identity with a naturally occurring GSHE sequence from the same species.

The rGSHE may be expressed in a host fungal strain different from the strain from which the GSHE was obtained. In some embodiments, the fungal strain is filamentous fungal strain of Aspergillus sp., Trichoderma sp., Fusarium sp., or Penicillium sp. Fungal hosts include *A. nidulans, A. awamori, A. oryzee, A. aculeatus, A. niger, A. japonicus, T. reesei, T. viride, F. oxysporum,* and *F. solani.* Aspergillus strains are disclosed in Ward et al. (1993) Appl. Microbiol. Biotechnol. 39: 738-43 and Goedegebuur et al. (2002) Curr. Gene 41: 89-98. Suitable strains of *T. reesei,* for example, include ATCC 13631, ATCC 26921, ATCC 56764, ATCC 56765, ATCC 56767 and NRRL 15709. In some embodiments, the host straincan be a derivative of RL-P37, which is disclosed in Sheir-Neiss et al. (1984) Appl. Microbiol. Biotechnol.20: 46-53.

A host strain that expresses GSHE may have be previously manipulated through genetic engineering. In some embodiments, various genes of the fungal host may be inactivated. These genes may encode cellulolytic enzymes, such as endoglucanases (KG) and exocellobiohydolases (CBH) (e.g., *cbh1, cbh2, egII* and *egl3*). US Patent No. 5,650,322 discloses derivative strains of RL-P37 having deletions in the *cbh1* gene and the *cbh2* gene.

### 2.4. Vectors and Fungal Transformation

A heterologous polynucleotide encoding a GSHE may be introduced into a fungal host cell by a vector, particularly an expression vector, which comprises a regulatory sequence operably linked to a GSHE coding sequence. The vector may be any vector which when introduced into a fungal host cell can be integrated into the host cell genome where it can replicate. The Fungal Genetics Stock Center Catalogue of Strains (on the Internet at >>www.FGSC.net<<) lists suitable vectors. Additional examples of suitable expression and/or integration vectors may be found in Van den Hondel et al. (1991) in MORE GENE MANIPULATIONS IN FUNGI, Bennett et al., eds., Academic Press, pp. 396-428, and U.S. Patent No. 5,874,276. Exemplary vectors include pFB6, pBR322, PUC18, pUC100, and pENTR/D.

A nucleic acid encoding a GSHE can be operably linked to a suitable promoter that shows transcriptional activity in a fungal host cell. The promoter may be derived from genes encoding proteins either homologous or heterologous to the host cell. Useful promoters in a Trichoderma host, for example, include *cbh1, cbh2, egII ,* and *egl2.* In one embodiment, the promoter can be one that is native to the host cell. For example, when *T. reesei* can be the host, the promoter may be a native *T. reesei* promoter, such as *cbh1,* which is an inducible promoter deposited in GenBank under Accession No. D86235. An inducible promoter is a promoter that is active under environmental or developmental regulation. In another embodiment, the promoter is one that is heterologous to the fungal host cell. Other examples of useful promoters include promoters from A. *awamori* and A. *niger* glucoamylase genes. *See* Nunberg et al. (1984) Mol. Cell Biol. 4: 2306-15 and Boel et al. (1984) EMBO J. 3: 1581-85. Also, the promoters of *T. reesei xin1* gene and cellobiohydrolase gene can be utilized. *See* EP 137 280 A1.

The GSHE coding sequence may be operably linked to a signal sequence. The DNA encoding the signal sequence may be naturally associated with the GSHE gene to be expressed. For example, the signal sequence can be encoded by a *Humicola grisea* or *Aspergillus awamori* GSHE gene. The signal sequence and promoter sequence may be derived from the same source. For example, the signal sequence may be a *cdh1* signal sequence operably linked to a *cdh1* promoter.

The expression vector typically includes a termination sequence. The termination sequence and promoter sequence may be derived from the same source. In some embodiments, the termination sequence is homologous to the host cell. A suitable terminator sequence can be *cbh1,* derived from a Trichoderma strain, such as *T. reesei.* Other useful fungal terminators include the terminator from *A. niger* or *A. awamori* glucoamylase gene. *See* Nunberg *et al.* (1984), *supra* and Boel *et al.* (1984), *supra.*

An expression vector typically includes a selectable marker. Examples of selectable markers include those that confer antimicrobial resistance (e.g., hygromycin and phleomycin). Nutritional selective markers also may be used, including amdS, argB and pyr4 markers. Markers useful in vector systems for transformation of Trichoderma are described, for example, in BIOTECHNOLOGY OF FILAMENTOUS FUNGI, Finkelstein et al., eds., Butterworth-Heinemann, Boston, MA (1992), Chap. 6; and APPLIED MOLECULAR GENETICS OF FILAMENTOUS FUNGI, Kinghorn et al., eds., Blackie Academic and Professional, Chapman and Hall, London (1992). The selective marker can be the *amdS* gene, for example, which encodes the enzyme acetamidase. Cells transformed with the amdS marker can grow on acetamide as a nitrogen source. *See* Kelley et al. (1985) EMBO J. 4: 475-79; and Penttila et al. (1987) Gene 61: 155-64.

An expression vector comprising a polynucleotide encoding a GSHE may be a vector that is capable of replicating autonomously in a given fungal host organism or of integrating into the DNA of the host. In one embodiment, an expression vector is a plasmid. In one embodiment, an expression vector comprises DNA sequences in which the promoter, GSHE coding region, and terminator all originate from the gene to be expressed. Undesired DNA sequences (e.g., coding for unwanted domains) may be deleted, leaving the domain to be expressed under control of its own transcriptional and translational regulatory sequences.

In another embodiment, the expression vector can be preassembled and contains sequences required for high-level transcription and a selectable marker. The coding region for a GSHE gene or part thereof can be inserted into this general-purpose expression vector, such that it is under the transcriptional control of the expression construct promoter and terminator sequences. For example, expressed sequences are inserted downstream of the strong *cbh1* promoter.

Methods used to ligate a vector comprising a polynucleotide encoding a GSHE, a promoter, a terminator and other sequences and to insert them into a suitable vector are well known in the art. Linking can be generally accomplished by ligation at convenient restriction sites. If such sites do not exist, the synthetic oligonucleotide linkers are used in accordance with conventional practice. *See* MOLECULAR CLONING, Sambrook et al., eds. Cold Spring Harbor (1989), and MORE GENE MANIPULATIONS IN FUNGI, Bennett et al., eds., Academic Press, San Diego (1991) pp 70-76.

Known methods may be used to obtain a fungal host cell having one or more inactivated genes. *See* U.S. Patent No. 5,246,853; U.S. Patent No. 5,475,101; and WO 92/06209. Gene inactivation may be accomplished by complete or partial deletion, insertional inactivation, or any other means that renders a gene nonfunctional for its intended purpose (i.e., such that the gene is prevented from expression of a functional protein). Any gene from Trichoderma sp. or other filamentous fungal host that has been cloned can be deleted. Examples include *cbh1, cbh2, egl1* and *egl2.* In some embodiments, gene deletion can be accomplished by inserting a form of the desired gene to be inactivated into a plasmid by known methods. The deletion plasmid can be then cut at an appropriate restriction enzyme site(s) internal to the desired gene coding region, and the gene coding sequence or part thereof can be replaced with a selectable marker. Flanking DNA sequences from the locus of the gene to be deleted (preferably about between 0.5 to 2.0 kb) remain on either side of the marker gene. An appropriate deletion plasmid generally will have unique restriction enzyme sites present therein to enable the fragment containing the deleted gene, including the flanking DNA sequences and the selectable marker gene to be removed as a single linear piece.

Techniques to introduce DNA constructs or vectors into a host cell are well known and include transformation, electroporation, nuclear microinjection, transduction, lipofection mediated transfection, DEAE-Dextrin mediated transfection, incubation with calcium phosphate DNA precipitate, high velocity bombardment with DNA-coated microprojectiles, and protoplast fusion, among others. General transformation techniques are taught in MOLECULAR CLONING, Sambrook et al., eds. Cold Spring Harbor (1989), among other places. Methods of transforming filamentous fungi particularly are disclosed in Campbell et al. (1989) Curr. Genet. 16: 53-56. Expressing heterologous proteins in *Trichoderma* is disclosed in U.S. Patent No. 6,022,725; U.S. Patent No. 6,268,328; Harkki et al. (1991) Enzyme Microb. Technol. 13: 227-233; Harkki et al., (1989) BioTechnol. 7: 596-603; EP 244 234; and EP 215 594. Reference is also made to Nevalainen et al., "The Molecular Biology of Trichoderma and its Application to the Expression of Both Homologous and Heterologous Genes", in MOLECULAR INDUSTRIAL MYCOLOGY, Leong et al. eds., Marcel Dekker, Inc., NY, pp. 129-148, 1992. Reference is also made to Cao et al. (2000) Protein Sci. 9: 991-1001 for transformation of Aspergillus strains.

Genetically stable transformants may be constructed with vector systems, whereby the nucleic acid encoding GSHE can be stably integrated into a host strain chromosome. Transformants may then be purified by known techniques. In one non-limiting example, stable transformants including an *amdS* marker are distinguished from unstable transformants by their faster growth rate and by the formation of circular colonies with a smooth, rather than ragged, outline on solid culture medium containing acetamide. In some cases, a further test of stability can be conducted by growing the transformants on solid non-selective medium (e.g., lacking acetamide), harvesting spores from this culture medium, and determining the percentage of these spores which will subsequently germinate and grow on selective medium containing acetamide. Other methods known in the art may be used to select transformants.

In one embodiment, the preparation of Trichoderma sp. for transformation involves the preparation of protoplasts from fungal mycelia. *See* Campbell et al. (1989) Curr. Genet. 16: 53-56. The mycelia may be obtained from germinated vegetative spores. In this case, the mycelia are treated with an enzyme that digests the cell wall, resulting in protoplasts. The protoplasts can be then protected by the presence of an osmotic stabilizer in the suspending medium. Suitable stabilizers include sorbitol, mannitol, potassium chloride, magnesium sulfate, and the like. Usually the concentration of these stabilizers in the suspension medium varies between 0.8 M and 1.2 M, e.g., 1.2 M sorbitol.

Uptake of DNA into the host *Trichoderma* sp. strain is dependent upon the calcium ion concentration. Generally between about 10 mM $CaCl_2$ and 50 mM $CaCl_2$ are used in an uptake solution. Other components in the uptake solution may include a buffering system, such as TE buffer (10 mM Tris, pH 7.4; 1 mM EDTA) or 10 mM MOPS (morpholinepropanesulfonic acid), pH 6.0, and polyethylene glycol (PEG). It is believed that polyethylene glycol acts to fuse the cell membranes, thus permitting the contents of the medium to be delivered into the cytoplasm of the Trichoderma sp. strain and the plasmid DNA to be transferred to the nucleus. This fusion frequently leaves multiple copies of the plasmid DNA integrated into the host chromosome.

Usually a suspension containing the Trichoderma sp. protoplasts or cells that have been subjected to a permeability treatment at a density of $10^5$ to $10^7$/mL are used in transformation. A volume of 100 $\mu$L of these protoplasts or cells in an appropriate solution (e.g., 1.2 M sorbitol; 50 mM $CaCl_2$) are mixed with the desired DNA.

Generally, a high concentration of PEG can be added to the uptake solution. From 0.1 to 1 volume of 25% PEG 4000, e.g., 0.25 volumes, can be added to the protoplast suspension. Additives such as dimethyl sulfoxide, heparin, spermidine, potassium chloride, and the like may also be added to the uptake solution and aid in transformation. Similar procedures are available; for other fungal host cells. *See, e.g.,* U.S. Patent No. 6,022,725 and U.S. Patent No. 6,268,328.

The mixture then can be incubated at approximately 0°C for a period of between 10 to 30 minutes. Additional PEG may be added to the mixture to further enhance the uptake of the desired gene or DNA sequence. 25% PEG 4000 can be generally added in volumes of 5 to 15 times the volume of the transformation mixture; however, greater and lesser volumes may be suitable. 25% PEG 4000 may be about 10 times the volume of the transformation mixture. After the PEG can be added, the transformation mixture can be then incubated either at room temperature or on ice before the addition of a sorbitol and $CaCl_2$ solution. The protoplast suspension can be then further added to molten aliquots of a growth medium. This growth medium permits the growth of transformants only. One skilled in the art is well aware that similar procedures and methods may be used to transform host cells and heterologously express other enzymes such as starch hydrolyzing enzymes in the host cells.

### 2.5. Cell Culture

Appropriate host cells are generally cultured in a standard medium containing physiological salts and nutrients, such as described in Pourquie et al., BIOCHEMISTRY AND GENETICS OF CELLULOSE DEGRADATION, Aubert et al., eds., Academic Press, pp. 71-86 (1988) and Ilmen et al. (1997) Appl. Environ. Microbiol. 63: 1298-1306. Common commercially prepared media include Yeast Malt Extract (YM) broth, Luria Bertani (LB) broth, and Sabouraud Dextrose (SD) broth. Culture conditions are also standard. For example, cultures may be incubated at approximately 28°C in appropriate media in shaker cultures or fermenters until desired levels of GSHE expression are achieved. Suitable culture conditions for filamentous fungi are available in the scientific literature or from the American Type Culture Collection and Fungal Genetics Stock Center (on the Internet: >>http://www.FGSC.net<<).

After fungal growth has been established, the cells are exposed to conditions effective to cause or permit the expression of a starch hydrolyzing enzymes and particularly a GSHE as defined herein. In cases where a GSHE coding sequence is under the control of an inducible promoter, the inducing agent, e.g., a sugar, metal salt, or antibiotics, can be added to the medium at a concentration effective to induce GSHE expression.

### 2.6. Identification of GSHE Activity

GSHE assays can evaluate the expression of a starch hydrolyzing enzyme by a cell line that has been transformed with a heterologous polynucleotide encoding the starch hydrolyzing enzyme. GSHE assays can be carried out at the protein level, the RNA level, or by use of functional bioassays particular to glucoamylase activity and/or production.

In general, exemplary assays employed to analyze the expression of a GSHE include: Northern blotting, dot blotting (DNA or RNA analysis), RT-PCR (reverse transcriptase polymerase chain reaction), *in situ* hybridization, using an appropriately labeled probe, and Southern blotting.

The production and/or expression of a GSHE may be measured in a sample directly, for example, by assays directly measuring reducing sugars such as glucose in the culture media and by assays for measuring glucoamylase activity, expression, and/or production. Suitable substrates for assaying GSHE activity include granular starch substrates. For example, glucose concentration may be determined by any convenient method, such as by using glucose reagent kit No 15-UV (Sigma Chemical Co.) or an instrument such as a Technicon Autoanalyzer (Saskatchewan, Canada). Suitable glucose oxidase kits and glucose hexose kits are commercially available from Instrumentation Laboratory (Lexington, MA). Glucoamylase activity may be assayed by the 3,5 dinitrosalicylic acid (DNS) method. *See* Goto et al. (1994) Biosci. Biotechnol. Biochem. 58: 49-54. In one non-limiting example, a rGSHE hydrolyzes granular starch in a 15% starch solids suspension in water to a solution of saccharides of at least 90%, 95%, and 97% wt ds glucose. In addition, protein expression, may be evaluated by immunological methods, such as immunohistochemical staining of cells, tissue sections, or immunoassay of tissue culture medium, e.g., by Western blot or ELISA. Such immunoassays can be used to qualitatively and quantitatively evaluate expression of a GSHE. The details of such methods are known to those of skill in the art and many reagents for practicing such methods are commercially available. The GSHE may be expressed by a recombinant *Trichoderma* host a greater than 1 gram protein per liter (g/L) of culture media. The amount of GSHE expressed by a recombinant *Trichoderma* host may be greater than 2 g/L, 5 g/L, 10 g/L, 20 g/L, 25 g/L, 30g/L, or 50 g/L of culture media.

### 2.7. Purification and/or Isolation of GSHE Activity

In general, a starch hydrolyzing enzyme (e.g., nGSHE or rGSHE) produced in cell culture is secreted into the medium and may be isolated, e.g., by removing unwanted components from the cell culture medium. In some cases, a GSHE may be produced in a cellular form necessitating recovery from a cell lysate. The enzyme may be purified from the cells in which it was produced using techniques routinely employed by those of skill in the art. Examples include, but are not limited to, affinity chromatography (Tilbeurgh et al. (1984) FEBS Lett. 16:215); ion-exchange chromatographic methods (Goyal et al. (1991) Biores. Technol. 36:37; Fliess et al. (1983) Eur. J. Appl. Microbiol. Biotechnol. 17:314; Bhikhabhai et al. (1984) J. Appl. Biochem. 6:336; and Ellouz et al. (1987) Chromatography 396:307), including ion-exchange using materials with high resolution power (Medve et al. (1998) J. Chromatography A808:153; hydrophobic interaction chromatography (Tomaz et al. (1999) J. Chromatography A865:123; two-phase partitioning (Brumbauer et al. (1999) Bioseparation 7:287); ethanol precipitation; reverse phase HPLC; chromatography on silica or a cation exchange resin, such as DEAE; chromatofocusing; SDS-PAGE; ammonium sulfate precipitation; and gel filtration, using Sephadex G-75, for example.

### 3. LT-Process Conditions

In the LT-Process, a composition comprising a rice substrate, preferably in slurry form, can be contacted or incubated with at least one GSHE to hydrolyze the granular starch. The GSHE may be supplied in a cell-free extract (e.g., a GSHE isolated from a culture medium) or supplied in a culture medium (e.g., fermentation broth) that contains fungal cells that express and secrete GSHE. More than one GSHE may be used in the LT-process. When two or more GHSE are used, they may combination of a glucoamylase and an alpha amylase, or they may be multiple different glucoamylases or multiple different alpha amylases. When an alpha-amylase(s) is added with a glucoamylase(s), the ratio of alpha amylase units (AAU) to glucoamylase units (GU) may be in the range of 15:1 to 1:15. In some embodiments, the ratio may be in the range of 10:1 to 1:10; 5:1 to 1:5; 4:1 to 1:4; about 2:1 to 1:4; or about 2:1 to 1:2. In some embodiments, a glucoamylase will be added to the rice substrate simultaneously with an alpha amylase. In other embodiments, a glucoamylase and alpha amylase may be added sequentially. In this case, the GSHE may be added within about 1 to 60 minutes or within about 1 to 30 minutes of each other.

A starch hydrolyzing enzyme can be used with a GSHE. The starch hydrolyzing enzyme can be a GSHE. When the starch hydrolyzing enzyme is an enzyme other than a GSHE, it is used at concentrations and conditions well known in the art to catalyze the hydrolysis of starch. In addition to a GSHE, starch hydrolyzing enzymes include, but are not limited to, a pullulanase, beta amylase, cellulase, pectinase, and beta-glucanase.

A glucoamylase may be added to the composition comprising a rice substrate in an amount of between about 0.001 to 15.0 GU/g ds of the slurry, which may be adjusted to 10-55% dry solids. In other embodiments, the glucoamylase may be added in an amount between about 0.01 to 10.0 GU/g ds, between about 0.01 and 5.0 GU/g ds, between about 0.01 and 2.0 GU/g ds, between about 0.01 and 1.5 GU/g ds, between about 0.05 and 1.5 GU/g ds, or between about 0.1 and 1.0 GU/g ds.

An alpha-amylase generally can be added to the composition comprising a rice substrate in an amount of about 0.001 to 5.0 kg of the alpha amylase per metric ton (MT) of the rice substrate, depending on the specific activity of the alpha amylase. In some embodiments, the alpha-amylase can be added in an amount of about 0.01 to 5.0 kg/MT; about 0.05 to 4.0 kg/MT; about 0.1 to 2.5 kg/MT; or about 0.5 to 1.5 kg/MT. For example, an amount of between about 0.01 to 1.5 kg of GZYME G997 or SPEZYME FRED (Genencor, a Danisco A/S division) may be added to a MT of starch. In other embodiments, GZYME G997 or SPEZYME FRED can be added in an amount between about 0.05 to 1.0 kg/MT; between about 0.1 to 0.6 kg/MT; between about 0.2 to 0.6 kg/MT; or between about 0.4 to 0.6 kg/MT.

The mixture comprising the rice substrate and the hydrolyzing enzymes is incubated at a temperature equal to or below the denaturation temperature of the proteins comprising the rice substrate. In some embodiments, the temperature can be below about 72°C, 70°C, 68°C, 65°C, 63°C, 60°C, 58°C, 55°C, 50°C, 45°C, or 40°C, but not less than 10°C. In other embodiments, the process can be conducted at a temperature of between about 70°C and 50°C. In further embodiments, the process can be conducted at a temperature of between about 70°C to 55°C, and also between about 65°C to 55°C. The mixture may be incubated at a pH in the range of about pH 3.0 to pH 6.5; about pH 3.0 to pH 6.0; about pH 3.0 to pH 5.5; about pH 3.5 to pH 5.0; about pH 3.0 to pH 4.0; about pH 4.5 to 6.5; or about pH 5.0 to 6.0. The mixture, when incubated at a temperature and pH as indicated above, may be incubated for a period of time of about 2 to 100 hours, about 10 to 100 hours, about 5 to 50 hours, or about 10 to 24 hours, for example.

In some embodiments, at least 60%, 65%, 70%, 75%, 80%, 85%, 90%, 94%, 95%, 96%, 97%, 98%, or 99% of the dry solids of the rice substrate are converted into a solubilized starch hydrolysate. In some embodiments, the dry solids of the rice substrate are completely solubilized. The process may have a glucose yield as a percent of the total solubilized dry solids of at least about 90%, 91%, 92%, 93%, 94%, 95%, 95.5%, 96%, 96.5%, 97%, 97.5%, 98%, 98.5%, 99%, or 99.5%.

At least 80%, 85% and 90% of the granular starch of the rice substrate may be solubilized and hydrolyzed in a time period of 24 hours. In other embodiments, at least 95% of the granular starch of the rice substrate can be solubilized and hydrolyzed in a time period of 24 hours. In yet other embodiments, at least 98% of the granular starch of the rice substrate can be solubilized and hydrolyzed in a time period of 24 hours.

The pH of the incubated slurry may be lowered to a pH of about 3.0 to 4.0 to terminate the enzyme reaction on the rice substrate. After a sufficient incubation time period, a fraction comprising the solubilized rice starch hydrolysate can be separated from the incubated slurry, leaving a residue that comprises a substantially insoluble rice protein concentrate. One skilled in the art is well aware of methods to accomplish separation. In general, some of these separation methods include centrifugation; conventional filtration methods and membrane separation processes.

### 3.1. Rice Protein Concentrates

Hydrolysis of a substantial portion of the starch in the rice substrate creates a solubilized starch fraction and a residue fraction containing insoluble rice protein. The solubilized starch fraction can be separated from the residue fraction, which is called the rice protein concentrate. The rice protein concentrate can be further purified by, for example, suspending in water and passing through a filter. The percent of proteins by weight in the rice protein concentrate is greater than 10%, 20%, 30%, 40%, or 50%. In some embodiments, the protein content of the rice protein concentrate is in the range of about 10% to 60%; about 10% to 50%, about 20% to 45%, or about 30% to 40%.

A high-purity rice protein concentrate may be obtained by further incubating the rice protein concentrate obtained above with a GSHE and a starch hydrolyzing enzyme for a period of time and at a temperature and pH as indicated above to hydrolyze remaining granular or insoluble starch. As before, two fractions are obtained: solublized starch and insoluble rice protein. The fractions can be separated to obtain a high-purity rice protein concentrate.

The enzyme hydrolysis of starch remaining in the residue may be terminated by lowering the pH, for example, from pH 5.5 to a pH in the range of pH 3.0-4.0, at a temperature of about 55°C to 60°C. The soluble rice starch hydrolysate may then be separated from the residue as described above to obtain the high-purity rice protein concentrate. The same starch hydrolyzing enzymes may be used as in the first hydrolysis reaction, or a different combination of GSHE and starch hydrolyzing enzyme may be used. The protein content ($N \times 5.95$) of the high-purity rice protein concentrate is generally greater than 60%, 63%, 65%, 68%, 70%, and 75%. In some embodiments, the high-purity rice protein concentrate will have a protein content of about 65% or greater, and also about 70% or greater.

The rice protein concentrate or high-purity rice protein concentrate obtained in accordance with the process may be dried using conventional and well-known techniques, e.g., vacuum drying, spray drying and freeze-drying. In some embodiments, the moisture content of the rice protein concentrate obtained according to the invention will be below about 10%, 9%, 8%, 7%, 6%, 5%, 4%, 3%, and 2%. In some embodiments, the obtained high-purity protein concentrate will be dried to a moisture content below 6%, 5%, 4%, 3%, and also 2%. In some embodiments, the moisture content will be between about 2% to 5%.

### 3.2. Properties of the Rice Protein Concentrates

The rice protein concentrate or high-purity rice protein concentrate has a relatively high weight percent of certain amino acids compared to soy protein concentrates. For example, the amount of glutamic acid, valine, leucine, proline, methionine, arginine, aspartic acid, or alanine can be may be greater in a rice protein concentrate obtained according to the present procedure.

Further, the protein concentrate and high-purity protein concentrate obtained according to the methods herein have improved characteristics over a protein fraction obtained by starch processing methods using conventional high temperature treatments. For example, the protein concentrate and high-purity protein concentrate comprise proteins with a greater solubility at alkaline pH levels and particularly at pH levels of 10.0, compared to proteins obtained from a conventional HT-Process. In some embodiments, the protein solubility of the present rice protein concentrates at pH 10 will be at least 20%, at least 40%, or at least 50%. In further embodiments, the protein concentrate and high-purity protein concentrate include proteins having greater solubility at acidic pH levels and particularly at pH levels of 2.0, compared to protein concentrates produced by an HT-Process. In some embodiments, the solubility at pH 2.0 will be at least 15%, at least 20%, at least 25%, or at least 30%.

### 3.3. Food Products Comprising Rice Protein Concentrates

The rice protein concentrate can be used in a food product. In this aspect, the rice protein concentrate can be used with other food ingredients, flavor enhancers, stabilizers, preservatives, and the like. The rice protein concentrate is first dispersed with water or other suitable solvent to form a wet dough, prior to mixing with the other ingredients of the food product. A "wet dough" for this purpose is a dough that is sufficiently dispersed with water or another suitable solvent to be suitable for slabbing and/or extrusion and further manipulations. A wet dough formed from the rice concentrate may contain 45% weight percent less than the amount of water or another suitable solvent required to make a wet dough from soy protein. "About" in this context means that some variance from 45% weight percent is expected, based on the normal error associated with measurement, relative humidity, etc. "About" thus normally encompasses a dough having 40-50% weight percent less water than soy protein wet dough. By "less than" about 45%, it is meant that the relative water content may be, for example, 40%, 35%, 30% lower, compared to soy wet dough, provided that the rice protein wet dough is still suitable for slabbing and/or extrusion and further manipulations. The rice protein concentrate also may be a food additive. In one such embodiment, the rice protein concentrate may provide extra nutritional value as an additive to a functional food, e.g., a nutraceutical bar or confectionary. The rice protein concentrate also may be used as a supplement or an ingredient of a supplement. For example, the rice protein concentrate can be added to a food product to supplement dietary protein intake. Non- limiting examples of the uses of the rice protein concentrate include an ingredient of a nougat-type bar center or an ingredient in a caramel center, or another similar high- viscosity bar center. The subject matter of the disclosure is described in further detail in the following examples. The following examples are offered to illustrate, but not to limit, the claimed invention.

### EXAMPLES

### Example 1

Rice protein concentrate from the LT-Process was produced using the method described in WO 2005/082155 A2. In this experiment, 10 kg whole rice was soaked in 40 kg water overnight with mild agitation and milled (greater than 95% passing through a 30-mesh screen) to produce a slurry. The pH of the slurry was adjusted to pH 5.5. Two GSHE were used to catalyze the hydrolysis of starch: an alpha-amylase, G Zyme® G997 (2 AAU/g ds starch) from Genencor-Danisco, and granular starch hydrolyzing glucoamylase from *Humicola* (1.0 GAU/g ds starch) (*see* U.S. Patent No. 7,303,899). The slurry was incubated at 60°C for 24 hours. The solubilized starch fraction and residue fraction containing insoluble rice protein were separated with a filter press to obtain the insoluble rice protein in the form of a cake. The cake was suspended in water and stirred well for uniform mixing before passing through a filter press again. The rice protein cake from the filter press was dried in a vacuum oven dryer at 60°C and used for further evaluation. The composition of the rice proteins concentrate from the LT-Process is shown in Table 1.

**Table 1**

| Carbohydrate | 10-15% |
| --- | --- |
| Proteins ($N \times 5.95$) | 60-70% |
| Fiber | 2-3% |

(continued)

| | |
|---|---|
| Ash | 2-4% |
| Fat | 5-10% |
| Moisture | 8-10% |

### Example 2

Rice protein concentrate was also prepared using a conventional HT-Process. In a typical experiment, 10 kg whole rice was soaked in 40 kg water overnight with mild agitation and milled (greater than 95 % passing through 30-mesh screen) to produce a slurry. The pH of the slurry was adjusted to pH 5.5. G Zyme® G997 (2 AAU/g ds starch) and granular starch hydrolyzing glucoamylase from *Humicola* (1.0 GAU/g ds starch) were added, and the slurry was incubated at 60°C for 24 hours. The soluble solids were then separated by using a filter press, and the insoluble rice protein cake was suspended in water and stirred well for uniform mixing before passing through a filter press again. The rice protein cake from the second filter pressing was dried in a vacuum oven dryer at 60°C. The composition of the rice protein is given in Table 2.

**Table 2**

| | |
|---|---|
| Carbohydrate | 20-25% |
| Proteins ($N \times 5.95$) | 50-60% |
| Fiber | 4-5% |
| Ash | 2-4% |
| Fat | 5-10% |
| Moisture | 8-10% |

### Example 3

A rice protein concentrate produced by a LT-Process was compared to a soy protein isolate (Soy Protein Supro 516, Solae Company, St. Louis, MO) in a chocolate nougat-type bar center. This type of chocolate center could be used as a component of a nutrition or confectionery bar. The rice protein concentrate could also be layered with other bar ingredients. Food products comprising the protein isolates were prepared according to the recipe shown in Table 3:

**Table 3**

| | |
|---|---|
| 1. | Disperse xanthan gum in water. |
| 2. | Place protein concentrate (powder form), high fructose corn syrup, sugar, glycerine, and betain in a mixing bowl. Blend all ingredients together. |
| 3. | Melt cocoa butter in a suitable container. Add PANODAN and stir until melted. Blend in cocoa powder with high agitation. |
| 4. | Blend parts 1 and 2 into part 3 with a sturdy mixer. |
| 5. | Form the complete product into a desired shape and coat. |

The compositions of the final food products are shown in Table 4. "LT Rice" food products comprise rice protein concentrate produced by a LT-Process, and "Soy" food products comprise soy protein isolate:

**Table 4**

| Parameters | Soy | LT Rice |
|---|---|---|
| Batchsize (g) | 1000.0 | 1000.0 |
| Total fat content (g/100g) | 11.3 | 11.3 |
| Total dry matter (g/100g) | 62.3 | 63.5 |

(continued)

| Parameters | Soy | LT Rice |
|---|---|---|
| Total fruit content (%) | 0.0 | 0.0 |
| | | |
| **Ingredients in wt %** | **Soy** | **LT Rice** |
| **Stabilizer phase:** | | |
| Water | 7.1 | 7.1 |
| XANTHAN 200 MESH (K0011) | 0.1 | 0.1 |
| **Stabilizer phase subtotal** | **7.1** | **7.1** |
| | | |
| **Sugar phase:** | | |
| SOY PROTEIN MODIFIED (L0094-A) | 29.7 | 0.0 |
| RICE PROTEIN CONCENTRATE (experimental powder) | 0.0 | 29.7 |
| HIGH FRUCTOSE CORN SYRUP 42 - LIQUID LSI SPECIALTY PROD | 16.2 | 16.2 |
| SUGAR - GRANULATED SYSCO | 9.7 | 9.7 |
| GLYCERINE 843025 | 3.5 | 3.5 |
| Betafin BF 20 USK06-00176 | 2.1 | 2.1 |
| **Sugar phase subtotal** | **61.3** | **61.39** |
| | | |
| **Fruit phase:** | | |
| PANODAN® 150 K (855709RM) 855709RM | 0.1 | 0.1 |
| Cocoa Powder 10-12% D-11-A | 4.9 | 4.9 |
| Cocoa Butter Barry Callebaut CB 655 | 2.1 | 2.1 |
| **Fruit phase subtotal** | **7.2** | **7.2** |
| **Calculated total** | **100.9** | **100.9** |
| **Yields** | **100.0** | **100.0** |
| **Final soluble solids** | **62.3** | **63.5** |

The water needed to create a wet dough with rice protein concentrate comprised 7% w/w of the final formula. By contrast, the water needed to create a wet dough with soy protein concentrate comprised 12% w/w of the final formula. Without being bound by theory, proteins in the rice protein concentrate are believed to maintain a higher state of hydration during the LT-Process, so that less water may be required to form the wet dough.

This property of rice protein concentrate is unexpected and confers advantageous properties on a food product comprising the rice protein concentrate. For example, the lower content of added water allows for a higher final protein concentration and content in the food product. Further, the final texture of the wet dough comprising rice protein concentrate was very desirable: heavy, thick, and pliable. By contrast, the wet dough using soy protein isolate product was undesirable: light, non-cohesive and breakable.

The lower water content of the wet dough also facilitates processing steps used to incorporate the rice protein concentrate into a variety of food products. For example, the unexpected texture of the wet dough also facilitates a manufacturing process because of the relative ease with which the dough is manipulated, compared to non-cohesive, crumbling dough Further, a process of manufacturing a food product comprising the rice protein concentrate is more economical, because less water is needed during the manufacturing process.

**Example 4**

The following experiment was conducted to determine and compare the amount water required to sufficiently hydrate rice and soy protein and form a dough in a high protein matrix for a nutrition bar application. A standard high protein dough formulation, as shown in Table 5, was used to compare soy and rice protein. The formulation allowed a measured amount of additional water to be added while dough formation was monitored. The various ingredients were mixed according to the procedure in Table 5, and then additional water was added in 50 g increments until a dough was formed.

**Table 5**

| Formulation of High Protein Dough for Nutrition Bar Application Ingredients in % | | |
|---|---|---|
| **Ingredient Name** | **Soy** | **Rice** |
| | | |
| **Stabilizer phase** | | |
| Water | 7.1 | 7.1 |
| XANTHAN 200 MESH | 0.1 | 0.1 |
| Stabilizer phase total | 7.1 | 7.1 |
| | | |
| **Sugar/Protein phase** | | |
| ISOLATED SOY PROTEIN, Supro EX 38, Solae | 29.7 | |
| RICE PROTEIN | | 29.7 |
| HIGH FRUCTOSE CORN SYRUP | 16.2 | 16.2 |
| SUGAR - GRANULATED | 9.7 | 9.7 |
| GLYCERINE | 3.5 | 3.5 |
| Betafin BF 20 | 2.1 | 2.1 |
| Sugar/Protein phase total | **61.3** | **61.3** |
| | | |
| **Fat Phase** | | |
| PANODAN® 150 K (855709RM) | 0.1 | 0.1 |
| Cocoa Powder 10-12% | 4.9 | 4.9 |
| Cocoa Butter Barry Callebaut | 2.1 | 2.1 |
| Fat phase total | **7.2** | **7.2** |
| | | |
| **Coating Phase** | | |
| C10141 SINGLE STRENGTH PURE VANILLA BLEND EXTRACT | 0.3 | 0.3 |
| Dark Chocolate Compound 34% fat 3676-16 & 21 | 25.0 | 25.0 |
| Coating phase total | **25.3** | **25.3** |
| | | |
| **Calculated total** | **100.9** | **100.9** |

(continued)

| Coating Phase | | |
|---|---|---|
| | | |
| **Procedure** | | |
| **1)** hydrate xanthan in cold water under high agitation; | | |
| **2)** melt together the cocoa butter and emulsifier; | | |
| **3)** blend together the dry ingredients in a Hobart mixer, on speed 1, for 1 minute; | | |
| **4)** mix the xanthan slurry, HFCS, and glycerine with other ingredients in the mixer, on speed 1, for 1 minute; | | |
| **5)** mix in the melted fat, and mix additional 1 minute; and | | |
| **6)** begin adding water until a cohesive dough is formed. | | |

After completely mixing the formula as shown in Table 5, each batch appeared as a dry powder-neither was able to form into a dough (*see* FIG. 1). Dough formation was not observed for either batch upon the addition of 50, 100, and 150 g of water. As illustrated in FIG. 1, it was not until 200 g of water were added that the rice protein batch formed into a dough that was suitable for slabbing and/or extrusion and further manipulations. The soy protein batch did not form a suitable dough until 450 g of water were added.

The rice dough had a water activity of 0.859, while that of the soy dough was 0.938. Although adjustment was necessary for both formulations to obtain a shelf-life of 12 months or longer, the soy formulation was much less acceptable. Mold development was observed after the soy protein formulation was kept at room temperature for a week.

The soy dough was very mouth-drying when eaten, having a pasty mouthfeel. The texture of the soy dough was also very rubbery. The rice dough was less pasty, smoother on the tongue, and less mouth-drying. Although the rice dough tasted more sour than the soy dough, the chocolate flavor of the rice dough was more intense.

In summary, the rice protein is capable of forming into a dough at a lower water content than the soy protein. The resulting rice dough displays an improved mouthfeel-smoother while less mouth drying and gritty. These properties are beneficial in making high protein doughs for nutrition bars, in view of the objective of including as much protein in the bar as possible. The rice protein thus appears to be a desirable material for producing nutrition bars.

### Example 5

The LT-Process rice protein concentrate was compared to soy protein isolate in a no-sugar-added caramel. This type of caramel can be used as a layer in a nutrition or confectionery bar. Food products comprising the protein isolates were prepared according to the recipe shown in Table 6:

| Table 6 |
|---|
| 1. Disperse carrageenan, rice protein, and evaporated skim milk in hot water (180°F) and mix for 5 minutes under high agitation. |
| 2. Melt together butter and DIMODAN HS-KA. Mix in sodium bicarbonate, salt, and disodium phosphate. |
| 3. Add litesse, betaine, and xylitol; blend part 1 with part 2; and continue heating to 240 °F under constant agitation. |
| 4. Add flavors and sucralose and pour onto trays to cool. |
| 5. When cool, layer at 20% on top of a core of protein concentrate in dough form, and enrobe with 30% NSA coating with Benefat® (Danisco), an ingredient used to replace fat. |

The compositions of the final food products are shown in Table 7. "LT Rice" food products comprise rice protein concentrate produced by a LT-Process, and "Soy" food products comprise soy protein isolate:

Table 7

| Parameters | Soy | LT Rice |
|---|---|---|
| Batchsize (g) | 1000.0 | 1000.0 |
| Total fat content (g/100g) | 3.5 | 3.5 |

(continued)

| Parameters | Soy | LT Rice |
|---|---|---|
| Total dry matter (g/100g) | 53.8 | 54.0 |
| Total fruit content (%) | 0.0 | 0.0 |
| | | |
| **Ingredients in %** | **Soy** | **LT Rice** |
| **Stabilizer phase** | | |
| Water | 24.0 | 24.0 |
| EVAPORATED SKIM MILK | 2.6 | 2.6 |
| SOY PROTEIN MODIFIED (L0094-A) | 5.0 | 0.0 |
| GRINDSTED® Carrageenan CS 115 (1203662) | 0.2 | 0.2 |
| RICE PROTEIN CONCENTRATE (experimental powder) | 0.0 | 5.0 |
| **Stabilizer phase subtotal** | **31.8** | **31.8** |
| | | |
| **Sugar phase** | | |
| BUTTER | 6.0 | 6.0 |
| SALT 100 MESH (M0065) | 0.3 | 0.3 |
| DISODIUM PHOSPHATE GRANULAR (U00414) | 0.1 | 0.1 |
| SODIUM BICARBONATE (L0051) | 0.1 | 0.1 |
| DIMODAN HS K-A (810773) | 0.2 | 0.2 |
| **Sugar phase subtotal** | **6.7** | **6.7** |
| | | |
| **Fruit phase** | | |
| LITESSE II 70% SS (104578) | 7.0 | 7.0 |
| LITESSE ULTRA 70% SS (104588) | 46.4 | 46.4 |
| SUCRALOSE 25% SOLUTION | 0.1 | 0.1 |
| XYLITOL C (136893) | 4.4 | 4.4 |
| Betafin BF 20 (USK06-00176) | 3.0 | 3.0 |
| **Fruit phase subtotal** | **60.9** | **60.9** |
| | | |
| **Other ingredients phase** | | |
| C10141 SINGLE STRENGTH PURE VANILLA BLEND EXTRACT | 0.6 | 0.6 |
| **Other ingredients phase subtotal** | **0.6** | **0.6** |
| | | |
| **Calculated total** | **100.0** | **100.0** |
| **Yields** | **100.0** | **100.0** |
| **Final soluble solids** | **53.8** | **54.0** |

The LT-Process rice protein concentrate was very easy to use, because it has an unexpected low viscosity. Low viscosity offers an advantage in a process of making a food product, particularly when the low viscosity rice protein concentrate is combined with other food components in a highly viscous final food product.

Producing a no-sugar-added caramel comprises heating to create color. As noted above, the rice protein concentrate produced by the LT-Process requires relatively little added water to disperse, compared to the soy protein isolate. Because the no-sugar-added caramel containing the rice protein concentrate contains less water, the length of the heating process is advantageously reduced. This in turn reduces overall cooking time and energy consumption.

**Example 6**

It is generally known that dietary proteins can influence plasma cholesterol level and that plant proteins especially can decrease plasma cholesterol compared to animal proteins. The mechanism of cholesterol-lowering is presently unclear, but the effect may be due to protein structure, which could be affected by different preparation techniques. Therefore, in the present example, the effects of rice protein concentrates prepared by a LT-Process and a HT-Process were compared.

Lactic dehydrogenase (LDH) activity was measured in addition to cholesterol-lowering activity. The accumulation of lactic acid induces prostration. LDH decreases lactic acid accumulation in muscle by catalyzing the conversion of lactic acid to pyruvic acid in the liver. LDH activity thus is one of the most important indexes to appraise metabolism during exercise.

Blood urea nitrogen (BUN) levels also were assayed. BUN levels rise in response to protein and amino acid metabolism during movement. BUN levels are a very sensitive index to appraise muscle stamina during burdened movement (i.e., burthen) and can be used as a common biochemical index to evaluate fatigue during medium or high intensity long term movement. The higher the BUN, the worse ability to endure burthen. For example, Poortmans reported an increase in BUN concentration during long time movement. *See* Poortmans et al. (2000) "Do regular high protein diets have potential health risks on kidney function in athletes?" Int. J. Sport Nutr. Exerc. Metab. 10: 28-38.

To investigate the effects of the LT- and HT-Process rice protein concentrates, animal models were established by feeding rats diets supplemented with the rice protein concentrates. The rats were supplied with the same dose of rice protein concentrates from the LT-Process ("LT") or HT-Process ("HT") for four weeks. In summary, plasma cholesterol levels were found to be decreased in LT and HT groups, and LT exerted preferable cholesterol-lowering effects compared to HT. Surprisingly, LDH activity was statistically significantly higher in the LT group than in those of Basic Diets (BD) control group and HT group. A slight decrease in BUN concentration was also observed in both the LT and HT groups, but the differences were not statistically significant. Both LT and HT had no negative impact on the liver weight of the test rats.

### 6.1. Analytical Procedures

Plasma was obtained from blood by centrifugation at 3000xg for 10min. Various biochemical parameters, such as total cholesterol (TC), triglyceride (TG), high-density lipoprotein cholesterol (HDL-C), lactic dehydrogenase (LDH) activity and blood urea nitrogen (BUN) were measured using Auto-analyzer, Hitachi7170A, (Hitachi, Tokyo). The wavelength for TC and TG was 505nm and for HDL-C was 600nm. Paired samples t-test was used for statistical analysis.

### 6.1.1. Cholesterol Determination

Cholesterol concentration was determined with an Autosanalyzer, Hitachi 7170A (Hitachi, Tokyo). All the reagents are from Roche Co., Ltd. Plasma was obtained rat blood by centrifugation at 3000xg for 10min. The plasma was then diluted with physiological saline. The samples and standards were poured into vials for analysis. The Autosanalyzer wavelength was set at 505nm, and cholesterol concentration was calculated with the following formula:

$$\text{Cholesterol concentration} = A\,(\text{sample})\,/\,A\,(\text{standard}) * C\,(\text{standard}),$$

where A = absorbance and C = concentration of the standard.

### 6.1.2. LDH Determination

LDH activity was measured using an assay system from Worthington Biochemical Company, NJ. Briefly, the reaction velocity was determined by a decrease in absorbance at 340 nm resulting from the oxidation of NADH. The $\Delta A_{340}$/min was determined from the initial linear portion of the reaction. A Unit is defined as the oxidation of one micromole of NADH per minute at 25°C, Tris·HCl, pH 7.3, under the specified conditions.

### 6.1.3. BUN Determination

An assay to determine BUN was modified from the method described by Sampson, et al. (1980) Clin. Chem. 26:816-26. In a first reaction, urease catalytically converts urea to ammonium carbonate. This reaction is coupled to a second reaction that depends on the concentration of glutamic dehydrogenase (GLDH). The rate of the second reaction can be measured by the rate of conversion of NADH to NAD$^+$ by the change of absorbency at 340nm:

$$\text{Urea} + H_2O \xrightarrow{\text{urease}} 2NH_3{}^+ + CO_2$$

$$2\text{-Oxoglutarate} + NH_3^+ + NADH + H^+ \xrightarrow{\text{GLDH}} \text{L-Glutamate} + NAD^+ + H_2O$$

### 6.2. Establishment of a High Plasma Cholesterol Level Model

Rats (about 18g in weight) were purchased from ShanHe Pharmaceutical Co. Ltd and housed individually in metal cages in a room with controlled temperature (21~25°C), humidity (40~50%), and a 12h light:dark cycle. For five days, the rats were fed basic diets (BD) to adapt to the laboratory environment. Subsequently, the rats were divided into 8 groups of 6 rats each, and assigned experimental diets. Chemical compositions of experimental diets containing cholesterol (EDCC) were shown in Table 8. Rats were fed EDCC containing 0.4 g LT or HT per kg body weight per day.

**Table 8**

| Chemical Compositions of EDCC | | | |
|---|---|---|---|
| Basic diet (BD) | Cholesterol | Lard | Yolk powder |
| 79% | 1% | 10% | 10% |

Before the feeding of experimental samples, blood samples were taken from a vena beside an eye. In experiment 1 with five groups, the effects of LT and HT on plasma cholesterol level were compared. In experiment 2 with three groups, the effects of LT and HT on duration were compared. The feeding period was 4 weeks.

Table 9 shows changes in TC, TG, and HDL-C in rats fed with EDCC and BD, respectively. Plasma total cholesterol levels in EDCC group were statistically significantly higher than those in the control group (P<0.01), showing that the model was successfully established.

**Table 9**

| | TC (mmol/L) | TG (mmol/L) | HDL-C (mmol/L) |
|---|---|---|---|
| BD | 2.15 ± 0.63 | 1.30 ± 0.27 | 2.02 ± 0.60 |
| EDCC | 4.03 ± 0.56** | 0.99 ± 0.46 | 2.98 ± 0.52 |

Values are means ± standard error of the mean (n = 3 rats/group). *P<0.025; **P<0.01; ***P<0.005.

### 6.3. Cholesterol-Lowering Effects of LT- and HT-Process Rice Protein Concentrates

Table 10 reveals a statistically significant decrease in total serum cholesterol after 30 days in rats fed with LT and HT diets (P<0.01). The cholesterol-lowering extent of LT and HT was 26.87% and 19.60%, respectively, compared with the EDCC diet. The results suggest that the LT-Process maintains the functional properties of rice protein concentrate more efficiently than the HT-Process. "MD" in Table 10 refers to a medial group, wherein rats were fed with EDCC containing 0.01 g Xue Kang Ning (100% Red Yeast Rice (Hong Qu), obtained through fermentation of premium grains of *Monascus* strains) per kg body weight per day.

**Table 10**

| | TC(mmol/L) | TG(mmol/L) | HDL-c(mmol/L) |
|---|---|---|---|
| BD | 1.84 ± 0.03 | 1.27 ± 0.27 | 1.55 ± 0.03 |
| EDCC | 4.54 ± 0.34 | 0.99 ± 0.21 | 3.74 ± 0.26 |

(continued)

|  | TC(mmol/L) | TG(mmol/L) | HDL-c(mmol/L) |
|---|---|---|---|
| MD | 3.78 ± 0.31* | 0.94 ± 0.08 | 2.92 ± 0.06 |
| LT | 3.32 ± 0.79** | 0.85 ± 0.26 | 2.67 ± 0.62 |
| HT | 3.65 ± 0.11** | 0.72 ± 0.10 | 3.01 ± 0.04 |

Values are means ± standard error of the mean (n = 3 rats/group). *P<0.025; **P<0.01; ***P<0.005.

## 6.4. Establishment of a Prostration Model

To establish a prostration model, rats were fed BD, LT, or HT under the same conditions as used to establish the high plasma cholesterol level model discussed in Example 6.2. Rats were burdened with an object having about 4% of the rat's total body weight. The burdened rats swam in water (28~32°C) for 40 min. After a 30 min rest, blood samples were collected individually and livers were removed and weighed. LDH activity was measured in the blood samples, using the procedure outlined in Example 6.1.2.

## 6.5. Effect of LT- and HT-Process Rice Protein Concentrates on LDH Activity

In blood samples from the prostration model above, LDH activity was statistically significantly and unexpectedly higher in the LT group than in the BD and HT groups, as shown in Table 11. LT particularly increased LDH activity 58.56% compared to HT at the same dose. The increase of LDH activity is expected to increase the metabolism of lactic acid and stave prostration.

**Table 11**

|  | LDH activity (U/L) |
|---|---|
| **BD** | 1305.67 ± 227.30 |
| **LT** | 1503.67 ± 197.31* |
| **HT** | 948.33 ± 78.78* |

Values are means ± standard error of the mean (n = 3rats/group). *P<0.025; **P<0.01; ***P<0.005.

## 6.6. Effect of LT- and HT-Process Rice Protein Concentrates on BUN Concentration

BUN concentration was determined in the same animals sacrificed to measure LDH activity. As shown in Table 12, a slight decrease of BUN concentration was observed with both LT- and HT-Process rice protein concentrate. Although the results were not statistically significant, the LT-Process rice protein concentrate certainly did not increase the BUN concentration. This result thus is consistent with the ability of LT-Process rice protein concentrate to enhance stamina and endurance of burthen, as measured by LDH activity in Example 6.5.

**Table 12**

|  | BUN Concentration (U/L) |
|---|---|
| BD | 12.63 ± 1.91 |
| LT | 11.27 ± 0.15 |
| HT | 12.50 ± 0.80 |

Values are means ± standard error of the mean (n = 3 rats/group). *P<0.025; **P<0.01; ***P<0.005.

## 6.7. Effect of LT- and HT-Process Rice Protein Concentrates on Liver Weight

Total body weight and liver weight were determined in the same animals sacrificed to measure LDH activity. The results in Table 13 show that the total body weight in both LT and HT groups was slightly, but not statistically significantly, lower than the BD group, probably reflecting the more limited overall caloric intake in these groups. There was no statistically significant difference in the ratio of total body weight to liver weight, showing that LT and HT had no negative impact on the liver of rats.

**Table 13**

| Changes in Total Body Weight and Liver Weight | | | |
|---|---|---|---|
| | LT | HT | BD |
| (A) Total Body Weight (g) | 25.44 $\pm$ 2.13 | 21.91 $\pm$ 1.41 | 30.82 $\pm$ 3.05 |
| (B) Liver weight(g) | 1.16 $\pm$ 0.12 | 0.95 $\pm$ 0.17 | 1.36 $\pm$ 0.27 |
| Ratio (B)/(A) (arbitrary units) | 4.57 $\pm$ 0.10 | 4.32 $\pm$ 0.56 | 4.39 $\pm$ 0.53 |

Values are means $\pm$ standard error of the mean (n = 3 rats/group). *P<0.025; **P<0.01; ***P<0.005.

**Claims**

1. A method of making a snack bar or nutrition bar comprising a rice protein concentrate, wherein said rice protein concentrate is in the form of a wet dough, the method comprising:

   (a) hydrolyzing a substantial portion of starch in a rice substrate with (i) an enzyme having granular starch hydrolyzing (GSH) activity and (ii) a second starch hydrolyzing enzyme, wherein incubation of said rice substrate with enzymes (i) and (ii) is carried out at a temperature at or below 72°C and at a pH of 3.0 to 6.5 for a period of time sufficient to obtain a solubilized starch fraction and a residue fraction containing insoluble rice protein;
   (b) separating the solubilized starch fraction from the residue fraction to obtain said rice protein concentrate; and
   (c) dispersing the rice protein concentrate in water or another suitable solvent to form a wet dough;
   wherein the rice protein concentrate is in the form of a wet dough suitable for slabbing and/or extruding, and
   d) making a snack bar or nutrition bar comprising said wet dough.

2. The method according to claim 1, wherein the enzyme having GSH activity is a glucoamylase.

3. The method according to claim 2, wherein the glucoamylase is derived from a strain of *Humicola, Rhizopus,* or *Aspergillus.*

4. The method according to any one of claims 1 to 3, wherein the second starch hydrolyzing enzyme is an alpha-amylase.

5. The method according to claim 4, wherein the alpha-amylase is derived from a bacterial source.

6. The method according to any one of claims 1 to 5, wherein the enzyme having GSH activity is obtained by heterologous expression in a *Trichoderma* strain or an *Aspergillus* strain.

7. The method according to any one of claims 1 to 6, further comprising purifying the rice protein concentrate and/or drying the rice protein concentrate.

8. The method according to any one of claims 1 to 7, wherein:

   (i) the rice protein concentrate has a protein content of at least 20%; and/or
   (ii) the rice substrate is slurried and has a dry solid content of between 10 to 55%; and/or
   (iii) the temperature is between 70°C and 55°C.

9. The method according to any one of claims 1 to 8 further comprising

   (bi) enzymatically hydrolyzing the rice protein concentrate obtained in subpart (b) with an enzyme having GSH activity and a starch hydrolyzing enzyme at a pH of 3.0 to 6.5 and at a temperature range of 70°C to 55°C to obtain a fraction including solubilized starch and insoluble rice protein;
   (bii) separating the fraction to obtain a high-purity rice protein concentrate; and.
   (biii) optionally drying the high-purity rice protein concentrate obtained in part (bii).

10. The method according to claim 9, wherein:

(i) the starch hydrolyzing enzyme of subpart (bi) is an alpha-amylase; and/or

(ii) the high-purity rice protein concentrate has a protein content of at least 60%.

11. The method of any one of claims 1-10, wherein the snack bar further comprises other food ingredients, flavour enhancers, stabilizers or preservatives.

**Patentansprüche**

1. Verfahren zur Herstellung eines Snackriegels oder Ernährungsriegels umfassend ein Reisproteinkonzentrat, wobei das Reisproteinkonzentrat in Form eines nassen Teigs vorliegt, wobei das Verfahren Folgendes umfasst:

(a) das Hydrolysieren eines wesentlichen Anteils an Stärke in einem Reissubstrat mit (i) einem Enzym, das eine granulöse Stärke hydrolysierende (GSH) Aktivität aufweist, und (ii) einem zweiten, Stärke hydrolysierenden Enzym, wobei das Inkubieren des Reissubstrats mit den Enzymen (i) und (ii) bei einer Temperatur von oder unter 72 °C und einem pH-Wert von 3,0 bis 6,5 für eine Zeitspanne ausgeführt wird, die ausreicht, um eine solubilisierte Stärkefraktion und eine restliche Fraktion zu erhalten, die unlösliches Reisprotein enthält;

(b) das Trennen der solubilisierten Stärkefraktion von der restlichen Fraktion, um das Reisproteinkonzentrat zu erhalten; und

(c) das Dispergieren des Reisproteinkonzentrats in Wasser oder einem anderen geeigneten Lösungsmittel, um einen nassen Teig zu bilden;

wobei das Reisproteinkonzentrat in Form eines nassen Teigs vorliegt, der für das Formen zu einem Teigbatzen und/oder Extrudieren geeignet ist und

d) das Herstellen eines Snackriegels oder Ernährungsriegels, der den nassen Teig umfasst.

2. Verfahren nach Anspruch 1, wobei das Enzym, das eine GSH-Aktivität aufweist, eine Glucoamylase ist.

3. Verfahren nach Anspruch 2, wobei die Glucoamylase von einem Stamm von *Humicola, Rhizopus* oder *Aspergillus* abgeleitet ist.

4. Verfahren nach einem der Ansprüche 1 bis 3, wobei das zweite Stärke hydrolysierende Enzym eine Alpha-Amylase ist.

5. Verfahren nach Anspruch 4, wobei die Alpha-Amylase von einer Bakterienquelle abgeleitet ist.

6. Verfahren nach einem der Ansprüche 1 bis 5, wobei das Enzym, das eine GSH-Aktivität aufweist, durch heterologe Expression in einem *Trichoderma-Stamm* oder einem *Aspergillus-Stamm* erhalten wird.

7. Verfahren nach einem der Ansprüche 1 bis 6, ferner das Reinigen des Reisproteinkonzentrats und/oder Trocknen des Reichsproteinkonzentrats umfassend.

8. Verfahren nach einem der Ansprüche 1 bis 7, wobei:

(i) das Reisproteinkonzentrat einen Proteingehalt von mindestens 20 % aufweist; und/oder

(ii) das Reissubstrat aufgeschlämmt wird und einen Trockenfeststoffgehalt zwischen 10 und 55 % aufweist; und/oder

(iii) die Temperatur zwischen 70 °C und 55 °C liegt.

9. Verfahren nach einem der Ansprüche 1 bis 8, ferner Folgendes umfassend

(bi) das enzymatische Hydrolysieren des Reisproteinkonzentrats, das im Unterteil (b) erhalten worden ist, mit einem Enzym, das eine GSH-Aktivität aufweist und einem Stärke hydrolysierenden Enzym bei einem pH-Wert von 3,0 bis 6,5 und in einem Temperaturbereich von 70 °C bis 55 °C, um eine Fraktion zu erhalten, die solubilisierte Stärke und unlösliches Reisprotein enthält;

(bii) das Trennen der Fraktion, um ein hochreines Reisproteinkonzentrat zu erhalten; und

(biii) wahlweise das Trocknen des hochreinen Reisproteinkonzentrats, das im Teil (bii) erhalten worden ist.

**10.** Verfahren nach Anspruch 9, wobei:

(i) das Stärke hydrolysierende Enzym des Unterteils (bi) eine Alpha-Amylase ist; und/oder
(ii) das hochreine Reisproteinkonzentrat einen Proteingehalt von mindestens 60 % aufweist.

**11.** Verfahren nach einem der Ansprüche 1 - 10, wobei der Snackriegel ferner andere Nahrungsmittelbestandteile, Geschmacksverbesserungsmittel, Stabilisatoren oder Konservierungsmittel umfasst.

**Revendications**

**1.** Procédé de fabrication d'une barre pour collation ou d'une barre nutritionnelle comprenant un concentré de protéine de riz, ledit concentré de protéine de riz se présentant sous la forme d'une pâte humide, le procédé comprenant:

(a) l'hydrolyse d'une partie substantielle de l'amidon dans un substrat à base de riz avec (i) une enzyme présentant une activité d'hydrolyse de l'amidon granuleux (GSH) et (ii) une seconde enzyme d'hydrolyse d'amidon, l'incubation dudit substrat à base de riz avec les enzymes (i) et (ii) étant effectuée à une température inférieure ou égale à 72°C et à un pH de 3,0 à 6,5 sur une durée suffisante pour obtenir une fraction d'amidon solubilisé et une fraction résiduelle contenant une protéine de riz insoluble;
(b) la séparation de la fraction d'amidon solubilisé de la fraction résiduelle pour obtenir ledit concentré de protéine de riz; et
(c) la dispersion du concentré de protéine de riz dans de l'eau ou un autre solvant approprié pour former une pâte humide;
le concentré de protéine de riz se présentant sous la forme d'une pâte humide convenant à la formation de plaque et/ou l'extrusion, et
d) la fabrication d'une barre pour collation ou d'une barre nutritionnelle comprenant ladite pâte humide.

**2.** Procédé selon la revendication 1, l'enzyme ayant une activité GSH étant une glucoamylase.

**3.** Procédé selon la revendication 2, la glucoamylase étant dérivée d'une souche d'*Humicola,* de *Rhizopus,* ou d'*Aspergillus.*

**4.** Procédé selon l'une quelconque des revendications 1 à 3, la seconde enzyme d'hydrolyse d'amidon étant une alpha-amylase.

**5.** Procédé selon la revendication 4, l'alpha-amylase étant dérivée d'une source bactérienne.

**6.** Procédé selon l'une quelconque des revendications 1 à 5, l'enzyme ayant une activité GSH étant obtenue par expression hétérologue dans une souche de *Trichoderma* ou une souche d'*Aspergillus.*

**7.** Procédé selon l'une quelconque des revendications 1 à 6, comprenant en outre la purification du concentré de protéine de riz et/ou le séchage du concentré de protéine de riz.

**8.** Procédé selon l'une quelconque des revendications 1 à 7:

(i) le concentré de protéine de riz présentant une teneur en protéine d'au moins 20 %; et/ou
(ii) le substrat à base de riz étant mis en suspension et présentant une teneur en matière solide sèche comprise entre 10 à 55 %; et/ou
(iii) la température étant comprise entre 70°C et 55°C.

**9.** Procédé selon l'une quelconque des revendications 1 à 8 comprenant en outre

(bi) l'hydrolyse de manière enzymatique du concentré de protéine de riz obtenu dans la sous-partie (b) avec une enzyme ayant une activité GSH et une enzyme d'hydrolyse d'amidon à un pH de 3,0 à 6,5 et à une plage de températures de 70°C à 55°C pour obtenir une fraction comprenant l'amidon solubilisé et la protéine de riz insoluble;
(bii) la séparation de la fraction pour obtenir un concentré de protéine de riz de haute pureté; et,
(biii) optionnellement le séchage du concentré de protéine de riz de haute pureté obtenu dans la partie (bii).

**10.** Procédé selon la revendication 9:

(i) l'enzyme d'hydrolyse d'amidon de la sous-partie (bi) étant une alpha-amylase; et/ou
(ii) le concentré de protéine de riz de haute pureté présentant une teneur en protéine d'au moins 60 %.

**11.** Procédé selon l'une quelconque des revendications 1 à 10, la barre pour collation comprenant en outre d'autres ingrédients alimentaires, des activateurs d'arôme, des agents stabilisants ou des agents conservateurs.

FIG. 1

Control,200 grams each

Rice          Soy

After addition of 100 grams of water

Rice          Soy

After addition of 200 grams of water

Rice          Soy

After addition of 450 grams of water

Soy

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4744992 A
- US 4990344 A
- US 20060035010 A
- WO 2005082155 A2
- WO 2005082155 A
- US 4863864 A
- EP 171218 A
- US 4618579 A
- US 5763385 A
- US 5824532 A
- US 5958739 A
- US 6008026 A
- US 6361809 B
- WO 9200381 A
- WO 0004136 A
- US 7303899 B
- US 5650322 A
- US 5874276 A
- EP 137280 A1
- US 5246853 A
- US 5475101 A
- WO 9206209 A
- US 6022725 A
- US 6268328 B
- EP 244234 A
- EP 215594 A

### Non-patent literature cited in the description

- **YANG et al.** *Biosci. Biotechnol. Biochem.,* 2007, vol. 71, 694-703
- **CARROLL et al.** *J. Am. Dietetic Assoc.,* 1991, vol. 91, 820-827
- **ANDERSON et al.** *New Engl. J. Med.,* 1995, vol. 333, 276-282
- **SHAW et al.** *Biosci. Biotechnol. Biochem.,* 1992, vol. 56, 1071-1073
- **JU et al.** *J. Food Science,* 2001, vol. 66, 229-232
- **HOUSTON et al.** *Cereal Chem.,* 1970, vol. 47, 5
- **PERDON et al.** *Phytochem.,* 1978, vol. 17, 351
- **LANDERS et al.** *Cereal Chem.,* 1994, vol. 71, 409-11
- **TOSI et al.** *Can. J. Microbiol.,* 1993, vol. 39, 846-55
- **KANLAYAKRIT et al.** *J. Ferment. Technol.,* 1987, vol. 65, 379-85
- **ASHIKARI et al.** *Agric. Biol. Chem.,* 1986, vol. 50, 957-64
- **ALLISON et al.** *Curr. Genet.,* 1992, vol. 21, 225-29
- **HAYASHIDA et al.** *Agric. Biol. Chem.,* 1989, vol. 53, 923-29
- **SHIBUYA et al.** *Agric. Biol. Chem.,* 1990, vol. 54, 1905-14
- **BOEL et al.** *EMBO J.,* 1984, vol. 3, 1097-1102
- **CHEN et al.** *Prot. Eng.,* 1996, vol. 9, 499-505
- **TAYLOR et al.** *Carbohydrate Res.,* 1978, vol. 61, 301-08
- **JENSEN et al.** *Can. J. Microbiol.,* 1988, vol. 34, 218-23
- **WARD et al.** *Appl. Microbiol. Biotechnol.,* 1993, vol. 39, 738-43
- **GOEDEGEBUUR et al.** *Curr. Gene,* 2002, vol. 41, 89-98
- **SHEIR-NEISS et al.** *Appl. Microbiol. Biotechnol.,* 1984, vol. 20, 46-53
- **VAN DEN HONDEL et al.** MORE GENE MANIPULATIONS IN FUNGI. Academic Press, 1991, 396-428
- **NUNBERG et al.** *Mol. Cell Biol.,* 1984, vol. 4, 2306-15
- **BOEL et al.** *EMBO J.,* 1984, vol. 3, 1581-85
- BIOTECHNOLOGY OF FILAMENTOUS FUNGI. Butterworth-Heinemann, 1992
- APPLIED MOLECULAR GENETICS OF FILAMENTOUS FUNGI. Blackie Academic and Professional, Chapman and Hall, 1992
- **KELLEY et al.** *EMBO J.,* 1985, vol. 4, 475-79
- **PENTTILA et al.** *Gene,* 1987, vol. 61, 155-64
- MOLECULAR CLONING. Cold Spring Harbor, 1989
- MORE GENE MANIPULATIONS IN FUNGI. Academic Press, 1991, 70-76
- **CAMPBELL et al.** *Curr. Genet.,* 1989, vol. 16, 53-56
- **HARKKI et al.** *Enzyme Microb. Technol.,* 1991, vol. 13, 227-233
- **HARKKI et al.** *BioTechnol.,* 1989, vol. 7, 596-603

- The Molecular Biology of Trichoderma and its Application to the Expression of Both Homologous and Heterologous Genes. **NEVALAINEN et al.** MOLECULAR INDUSTRIAL MYCOLOGY. Marcel Dekker, Inc, 1992, 129-148
- **CAO et al.** *Protein Sci.,* 2000, vol. 9, 991-1001
- **POURQUIE et al.** BIOCHEMISTRY AND GENETICS OF CELLULOSE DEGRADATION. Academic Press, 1988, 71-86
- **ILMEN et al.** *Appl. Environ. Microbiol.,* 1997, vol. 63, 1298-1306
- **GOTO et al.** *Biosci. Biotechnol. Biochem.,* 1994, vol. 58, 49-54
- **TILBEURGH et al.** *FEBS Lett.,* 1984, vol. 16, 215
- **GOYAL et al.** *Biores. Technol.,* 1991, vol. 36, 37
- **FLIESS et al.** *Eur. J. Appl. Microbiol. Biotechnol.,* 1983, vol. 17, 314
- **BHIKHABHAI et al.** *J. Appl. Biochem.,* 1984, vol. 6, 336
- **ELLOUZ et al.** *Chromatography,* 1987, vol. 396, 307
- **MEDVE et al.** *J. Chromatography,* 1998, vol. A808, 153
- **TOMAZ et al.** *J. Chromatography,* 1999, vol. A865, 123
- **BRUMBAUER et al.** *Bioseparation,* 1999, vol. 7, 287
- **POORTMANS et al.** Do regular high protein diets have potential health risks on kidney function in athletes?. *Int. J. Sport Nutr. Exerc. Metab.,* 2000, vol. 10, 28-38
- **SAMPSON et al.** *Clin. Chem.,* 1980, vol. 26, 816-26